# DEMANDE DE BREVET EUROPEEN

(11) **EP 1 378 380 A1**
(43) Date de publication de la demande: **07.01.2004**
(21) Numéro de dépôt: 02368068.9
(22) Date de dépôt: 01.07.2002
(51) Int. Cl.: B60F 1/04

(54) **Tracteur rail-route tractable à grande vitesse**

(71) Demandeur: Louveau, Christian, 06390 Coaraze (FR)
(72) Inventeur: Louveau, Christian, 06390 Coaraze (FR)

(57) **Abrégé**

L'invention concerne un dispositif relatif à un matériel roulant ferroviaire automoteur sur rails cumulant plusieurs multifonctions tout en offrant une excellente visibilité en toute circonstance

Il est constitué d'une partie motrice (7) composée d'un châssis équipé de 2 essieux moteurs et directeurs et de roues pneumatiques (1) positionnable via un système à déplacement vertical par rapport à une partie ferroviaire (8) composée d'un cadre posé sur 2 essieux équipés de roues ferroviaires (2) permettant ainsi de répondre aux contraintes relatives aux différentes utilisations sur rails (3) en locotracteur traditionnel ou rail-route ou en wagons et sur route (4). La cabine de conduite (5) est orientable grâce à la tourelle (6) dans tous les sens de marche.

## Description

Les locotracteurs traditionnels ne peuvent pas être remorqués à grande vitesse, sauf au prix d'une importante préparation qui doit respecter une procédure longue et complexe. D'une part, une fois sur site, il faut les rendre à nouveau automoteur en inversant cette importante préparation.

D'autre part, lorsque les locotracteurs traditionnels doivent libérer les voies de circulation sur lesquelles ils se trouvent, ils sont obligés de se rendre sur des voies de garage, quelquefois très éloignées du site de travail, causant d'importantes pertes de temps.

Les locotracteurs railroutes, quant à eux, de par leur conception, ne peuvent, en aucun cas, être insérés comme wagons traditionnels et donc ne peuvent pas être remorqués à grande vitesse. Leurs roues pneumatiques, seul moyen efficace de traction, ne doivent pas être en contact avec le rail sur les voies ferroviaires dites "principales" selon la réglementation internationale des chemins de fer, rendant leur utilisation impossible sur ces voies, obligeant ainsi l'utilisation de locotracteurs ou locomotives, matériels lourds et coûteux, pour des travaux sur ces voies principales.

La conception des cabines de conduite des locotracteurs traditionnels et railroutes ou des locomotives oblige le conducteur, lorsqu'il y a un changement de direction, soit à changer de cabine de conduite ou à changer de poste de conduite en perdant en visibilité.

Les recherches d'antériorité dans ce domaine d'application permettent d'affirmer qu'à ce jour aucune demande de brevets nationaux, européens ou internationaux est concordante avec le dispositif de l'invention décrit ici.

La demande de brevet d'invention n° 95 00181 concerne seulement un système particulier de roues guidage pour véhicule routier sans rapport avec l'invention.

La demande n° 94 09912 - WO 96/05078 présente un engin de travail à plate-forme réglable qui n'offre pas la possibilité de tracter des rames de wagons et ne peut être déplacé sur rail à grande vitesse dans un convoi.

La demande EP 0 249 816 A2 concerne un système de roulage ferroviaire pour relier des remorques routières entre elles, donc sans rapport.

La demande 79 22869 concerne un système particulier de roues de guidage ferroviaires pour camion grue. Ce système ne permet pas de déplacement à grande vitesse sur rails.

La demande WO 85/01481 concernant un bogie, utilisé dans un système de transport intermodal, n'est en rien comparable à l'invention décrite.

La demande WO 97/21558 est relative à un véhicule uniquement ferroviaire de transport avec transfert de charge sur le module tracteur, sans rapport avec le dispositif proposé.

La demande WO 98/43838 propose une machine d'excavation, couramment appelé tracto-pelle, apte à circuler sur rails, également sans rapport.

La demande WO 99/61266 permet à un véhicule routier (camion) d'évoluer sur voies ferrées par l'addition de modules à ces extrémités. Cette solution intermodale ne permet pas la traction de rames ferroviaires.

La demande EP 0 483 651 A1 propose un faux châssis équipé de roues ferroviaires adaptables sur un châssis cabine de camion. Cet ensemble devient un véhicule de transport évoluant seul. Il ne peut donc pas tracter des wagons et ne peut être remorqué ou intégré dans un convoi ferroviaire.

La demande 89 05612 concerne un véhicule railroute. La motricité ferroviaire est obtenue par frottement des pneumatiques sur les roues ferroviaires. Il ne peut pas bénéficier du coefficient d'adhérence très élevé du caoutchouc des pneumatiques sur l'acier des rails, être déplacé à grande vitesse à l'intérieur d'un convoi ferroviaire et disposer d'une cabine de conduite orientée dans le sens de marche.

La demande 92 00277 propose un excavateur pouvant travailler sur voies ferrées. Il n'est pas apte à tracter des wagons lourds et ne peut pas être déplacé en remorque à grande vitesse.

La demande 80 11219 concerne un véhicule railroute destiné à tracter des wagons, mais il ne dispose pas d'une cabine réversible et ne peut pas être tracter dans un convoi ferroviaire à grande vitesse.

La demande 87 05633 présente un système permettant à un véhicule routier (camion) de se déplacer sur voies ferrées. Cet ensemble n'est pas prévu pour tracter des véhicules ferroviaires, ne dispose pas de cabine réversible et ne peut pas être remorqué à grande vitesse sur rail.

La demande WO 95/09738 propose un aménagement pour guider un véhicule sur rails. Cet ensemble n'a pas la possibilité de tracter des charges, ne dispose pas de cabine réversible et ne peut pas être tracté à grande vitesse.

La demande 86 16424 concerne l'adaptation d'un camion ou d'un autocar pour circuler sur rails. La motricité sur rails se fait par un seul essieu moteur. Il n'est donc pas possible de tracter des charges lourdes, la cabine n'est réversible et il n'est pas déplaçable à grande vitesse sur rails.

Les demandes 96 15526 - EP 0 847 882 A1 concerne un véhicule railroute pour travaux ferroviaires à mise sur rails perpendiculairement à la voie ferrée. Il n'est pas tracteur, ni tractable dans un convoi ferroviaire, ni doté de cabine réversible.

La demande EP 0 887 243 A2 concerne un véhicule d'intervention incendie pour intervention sur voies ferrées, sans rapport avec l'invention.

La demande 94 06404 propose un locotracteur railroute sur lequel la motricité est obtenue par les pneumatiques sur le rail. Cette formule offre un bon coefficient d'adhérence mais il n'est pas autorisé à utiliser des voies ferrées principales. Il n'a pas la faculté de choisir selon les voies ferrées utilisées le type de motricité "pneumatiques" sur rails ou "roues ferroviaires" sur rails, il ne dispose pas de cabine réversible et ne peut pas être tracté à grande vitesse dans une rame sur voies ferrées.

La demande 94 04069 concerne encore un camion nacelle équipé d'un système railroute et non d'un tracteur de charges.

Les demandes WO 95/29822 et WO 95/13930 concernent un système particulier de mise sur rails pour véhicule routier de travail sans rapport avec des locotracteurs pour rames de wagons.

La demande EP 0 621 166 A1 propose un locotracteur railroute à transfert de charge pour augmenter la masse motrice sur les roues ferroviaires. Les roues pneumatiques ne jouent aucun rôle sur les voies ferrées, donc sans relation avec l'invention.

La demande EP 0 583 001 A1 décrit un principe d'orientation des roues pneumatiques motrices pour diminuer l'usure de ces dits pneumatiques. Cet engin ne peut être remorqué à grande vitesse ni utiliser des voies principales et ne possède pas de cabine réversible.

La demande EP 0 556 161 A1 concerne un dispositif à monter sur un engin de chantier pour effectuer des travaux de terrassement sur voies ferrées, sans rapport avec l'invention.

La demande 88 08415 concerne un locotracteur railroute à châssis articulé qui ne peut ni utiliser des voies ferrées principales, ni être tracté à grande vitesse et ni posséder de cabine réversible.

La demande EP 0 023 476 A1 concerne un dispositif permettant de déplacer temporairement un véhicule routier sur rails. Il ne peut en aucun cas être remorqué à grande vitesse ni même tracter de lourde charges.

La demande 88 00008 - EP 0 323 933 A1 se rapporte à un système de guidage à double galet pour véhicules circulant sur des voies ferrées principales. Ils ne peuvent pas tracter de charges lourdes, ni être remorqués à grande vitesse dans un convoi ferroviaire et avoir de cabine réversible.

La demande EP 0 641 681 A1 concerne un bogie particulier adaptable sur véhicule routier, sans rapport avec l'invention.

La demande EP 0 648 660 A1 présente un système particulier de manoeuvre de véhicules ferroviaires ou routiers commandé par un opérateur à pied, sans rapport.

La demande 84 03345 correspond à un système de locotracteur railroute sur la base d'un élévateur chargeur qui ne peut ni utiliser des voies ferrées principales, ni être tracter à grande vitesse et ni posséder de cabine réversible.

Les demandes 88 07000 - 95 15846 - WO 99/01304 - 97 13603 - EP 0 625 439 A1 - WO 93/24339 - 91 06064 - WO 82/00800 et EP 0 005 578 A1 concernent des systèmes particuliers d'adaptation de remorques routières au transport intermodal.

Le brevet DE 297 23 673 U concerne un véhicule qui ne possède pas de cabine orientable, ni de roues ferroviaires de grand diamètre, ni de suspension. Il n'est pas construit et n'est pas conforme aux normes pour pouvoir être remorqué à grande vitesse (120 km/h) intégré dans un train.

Le brevet US 4 534 297 A tel que défini correspond à un engin de manutention en grue ou autre équipement de maintenance ou de levage. Il ne s'agit pas d'un locotracteur.

Le brevet CH 200 305 A décrit un dispositif ne constituant pas un ensemble pouvant rentrer et sortir des voies ferrées par ses propres moyens. Cette plate-forme est inerte sans l'apport d'un véhicule routier et est non conforme techniquement aux normes UIC pour être inséré dans une rame de wagons.

Le brevet DE 196 43 240 C concerne une pelle hydraulique excavatrice rail route pour effectuer des travaux de terrassements et non un locotracteur comme défini dans les revendications page 8.

Le dispositif suivant l'invention supprime ces inconvénients. Il est destiné à être inséré, aisément, comme wagon traditionnel dans un train composé de wagons pour être transférés d'un point à un autre à grande vitesse et être rapidement opérationnel arrivé sur site.

Une fois sur le lieu de travail, ce dispositif peut se déplacer par ses propres moyens sur rails, seul ou en tractant des matériels roulants ferroviaires (wagons, locotracteurs, locomotives, train complet,...) sur des embranchements privés, sur des voies de service, sur des voies principales, sur des voies en cours d'installation, etc.....

Ce dispositif peut, aussi, se déplacer par ses propres moyens sur route ou toutes aires carrossables afin de faciliter des déplacements impossibles sur voies ferrées ou libérer ces mêmes voies ferrées.

Ce dispositif permet au conducteur ainsi qu'aux accompagnateurs, lorsqu'il y a un changement de direction, ce qui est souvent le cas dans certains types de travaux, de rester face au sens de marche sans perdre en visibilité et cela sans quitter son poste de conduite.

Sur les dessins annexés, sont donnés, à titre d'exemple non limitatif, les formes de réalisation de l'objet de l'invention :
La figure 1 représente le dispositif en position locotracteur "type railroute". La motricité se fait par la force appliquée par les roues pneumatiques (1) sur les rails (3), le guidage sur les rails de l'ensemble du dispositif se fait par l'appui contrôlé des roues ferroviaires (2) sur les rails (3).
La figure 2 représente le dispositif en position locotracteur "type traditionnel". Lorsque le type des voies ferrées ne permet pas le contact des roues pneumatiques (1) sur les rails (voies principales), l'ensemble de traction composé des roues pneumatiques (1) est relevé suffisamment pour dégager les rails (3). Dans ce cas, la motricité est obtenue par les roues ferroviaires (2) au moyen de moteurs hydrostatiques.
La figure 3 représente le dispositif en position "type wagon".
   La partie motrice, constituée des roues pneumatiques (1), est relevée au maximum, dégageant la voie, les roues ferroviaires (2) seules, étant en appui sur les rails (3). Les moteurs hydrostatiques sont désolidarisés des essieux ferroviaires.
La figure 4 représente le dispositif en position "type route".
   La partie motrice, constituée des roues pneumatiques (1) est descendue au maximum.
   Les quatre roues pneumatiques sont motrices et directionnelles.
   L'ensemble ferroviaire, constitué des roues ferroviaires (2) se trouve surélevé afin que celles-ci ne soient pas en contact avec le sol (4).
La figure 5 représente le dispositif dans les 2 sens de conduite
   La cabine de conduite (5) est montée sur une tourelle (6), commandée depuis le poste de conduite, ses dimensions permettent une rotation sans engager le gabarit ferroviaire et donc d'être utilisée sur des voies de circulation double en exploitation.
   La partie motrice de l'appareil (7) est composée d'un châssis équipé de 2 (ou plus dans certains cas) essieux moteurs et directeurs (pour la position route), d'une transmission couplée à un moteur thermique enfermé dans un capotage. La cabine de conduite (5) à plusieurs places pour les opérateurs est orientable dans le sens de marche.

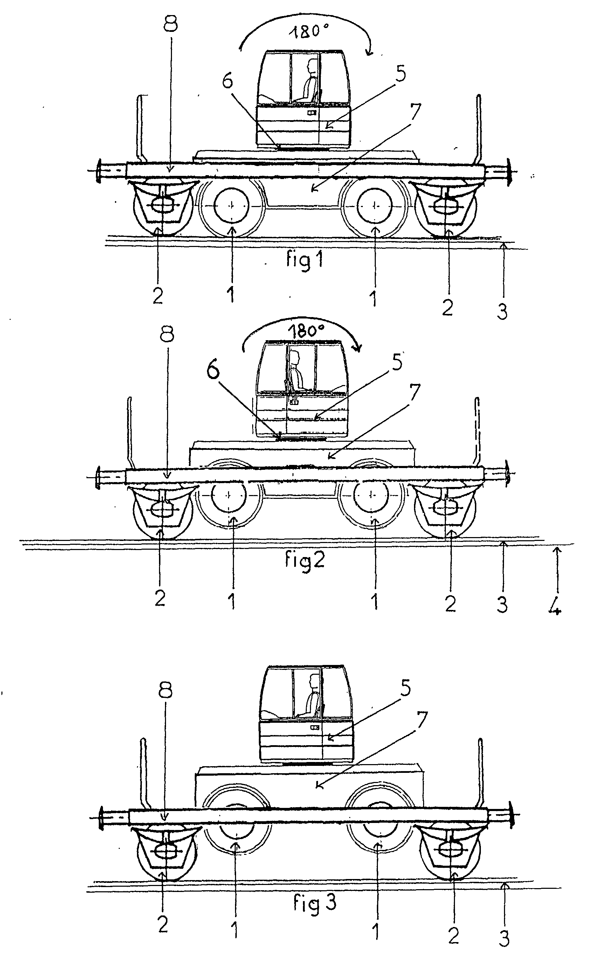

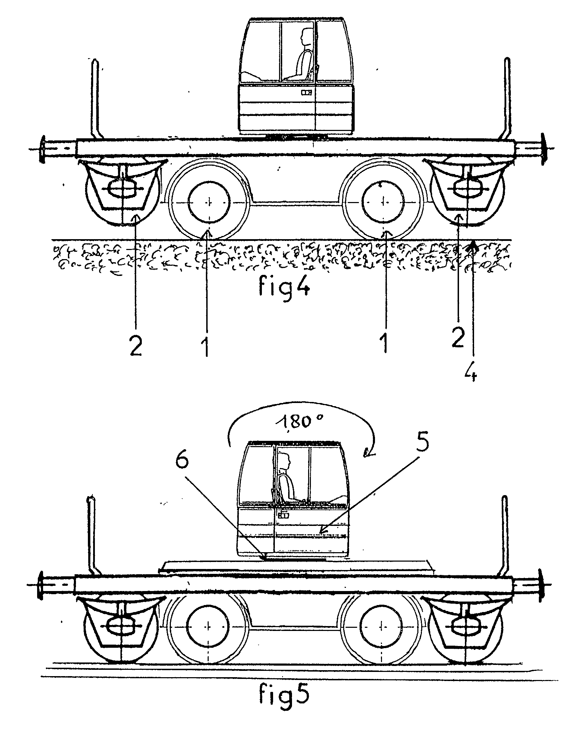

La partie ferroviaire (8) est composée d'un cadre posé sur 2 essieux ou 2 boggies équipés de roues ferroviaires. Cet ensemble ferroviaire répond aux normes internationales des chemins de fer (gabarit, freinage traction/tracté, attelage, ....). Le déplacement vertical de la partie motrice (7) à l'intérieur de la partie ferroviaire (8) se fait par un système adéquat tel que par des vérins, crémaillère ou tous autres systèmes. Dans la position locotracteur "type railroute", le système exerce une pression déterminée et contrôlée en permanence pour assurer un bon compromis entre le guidage de la partie ferroviaire (8) et une bonne adhérence de la partie motrice (7). Dans la position locotracteur "type traditionnel", le système remonte la partie motrice (7) en position intermédiaire. Dans la position "type route", le système remonte totalement la partie ferroviaire (8). Dans la position "type wagon", le système remonte totalement la partie motrice (7). Dans la position "type route", la position "type wagon" et la position locotracteur "type traditionnel" les éléments du système sont sécurisés dans leur position par un blocage.
Le but à atteindre est de résoudre avec un engin défini comme "locotracteur" tous les problèmes liés à l'accessibilité aux voies ferrées à partir d'un sol carrossable et à son utilisation sur les différents types de voies ferrées .
Pour cela, le locotracteur doit être de type railroute. L'engin étant en position "type route" (fig 4), le chauffeur doit présenter celui-ci sur la voie ferrée. La mise sur rails est facilitée par la bonne visibilité de la voie et des roues grâce aux caméras vidéos installées sur l'engin et au moniteur vidéo installé dans la cabine de conduite. Ensuite, le chauffeur sélectionnant le sens de marche, la cabine s'oriente en fonction de celui-ci.
Pour réaliser le déplacement d'une rame de wagons lourdement chargés, l'opérateur opte pour la position locotracteur "type railroute" (fig 1), dans ce cas le coefficient d'adhérence des pneumatiques sur le rail est optimal, soit 0,70. Pour un locotracteur d'un poids total de 50 tonnes, l'appui des roues ferroviaires appelé "masse guidante" correspondant à 20% du poids total, la "masse motrice" est de 40 tonnes à laquelle il faut appliquée le coefficient d'adhérence de 0,70 soit un effort de traction de 27 468 daN. Sur certaines voies ferrées, le contact des pneumatiques sur le rail est interdit. Dans ce cas, l'opérateur doit opter pour la position locotracteur "type traditionnel" (fig 2), le coefficient d'adhérence des roues ferroviaires sur le rail chute à 0,20 et s'applique alors sur le poids total du locotracteur soit un effort de traction de 9 810 daN.
D'une part, la dégradation des voies ferrées (verglas, feuille mortes, graisse, etc ....) a pour effet de faire chuter les coefficients d'adhérence donnés, les efforts de traction diminuent considérablement.
D'autre part, sachant que pour vaincre la résistance à la traction des wagons, il faut développer 5 kg d'effort de traction pour tracter 1 tonne de wagon sur une voie droite et plane, les capacités de traction sont de 5 600 tonnes en position "type railroute" et de 2 000 tonnes en position "type traditionnel". Lorsque la topographie des voies ferrées (courbes, contre-courbes, rampes, etc ...) est dégradée, la résistance à vaincre augmente considérablement, diminuant ainsi les capacités de traction.
Les manoeuvres de traction terminées, l'engin peut se déplacer sur voies ferrées par ses propres moyens dans l'une des deux positions citées plus haut ou bien être remorqué en tant que wagon traditionnel à grande vitesse en le mettant en position "type wagon" dans le respect des réglementations de l'Union Internationale des Chemins de fers.

## Revendications

1. Dispositif relatif à un matériel roulant ferroviaire automoteur sur rails (3) équipé d'une cabine de conduite (5), pouvant se déplacer et tracter aussi bien en version locotracteur de "type rail-route" qu'en version locotracteur de "type traditionnel" et être remorqué dans un convoi ferroviaire et se déplacer sur route (4) par ses propres moyens **caractérisé en ce que** la partie motrice (7) constituée de roues pneumatiques (1), se positionnant de différentes façons par rapport à la partie ferroviaire (8) constituée des roues ferroviaires (2) grâce au système de déplacement vertical adéquat sert, soit d'essieux de traction sur rails (3) en version locotracteur de "type rail-route", soit d'essieux de traction sur route (4) en version route.

2. Dispositif selon la revendication 1 **caractérisé en ce que** la partie ferroviaire (8) constituée de roues ferroviaires (2), se positionnant de différentes façons grâce au système de déplacement vertical adéquat, sert, soit d'essieux de guidage sur rails (3) en version locotracteur de "type rail-route", soit d'essieux de traction sur rails (3) en version locotracteur de "type traditionnel", soit d'essieux de roulage en version wagons.

3. Dispositif selon l'une des revendications précédentes, **caractérisé en ce que** la cabine de conduite (5) est tournante à 180° grâce au montage sur une tourelle (6) et permet une visibilité quel que soit le sens de marche et quel que soit le type d'utilisation du dispositif.
